# EUROPEAN PATENT SPECIFICATION

(11) **EP 2 429 833 B1**
(45) Date of publication and mention of the grant of the patent: **29.06.2016**
(21) Application number: 09844733.7
(22) Date of filing: 13.05.2009
(51) Int. Cl.: B60C 11/12, B29D 30/06

(54) **TIRE WITH A SIPE HAVING AREAS WITH REDUCED THICKNESS AND APPARATUS FOR MAKING THE SAME**
REIFEN MIT LAMELLE MIT BEREICHEN VERRINGERTER DICKE UND GERÄT ZU SEINER HERSTELLUNG
PNEUMATIQUE POURVU D'UNE LAMELLE COMPORTANT DES ZONES D'ÉPAISSEUR RÉDUITE ET SON APPAREIL DE FABRICATION

(43) Date of publication of application: 21.03.2012
(73) Proprietor: Compagnie Générale des Etablissements Michelin, 63000 Clermont-Ferrand (FR); MICHELIN Recherche et Technique S.A., 1763 Granges-Paccot (CH)
(72) Inventor: JENKINS, Brian, William, Greenville, SC 29615 (US); MORGAN, David, Scott, Greenville, SC 29605 (US); WHITE, Timothy, A., Greer, SC 29650 (US)
(74) Representative: Dossmann, Gérard
(86) International application number: PCT/US2009/043772
(87) International publication number: WO 2010/132052

(56) References cited:
- EP-A1- 1 533 141
- JP-A- 2002 316 517
- US-A1- 2005 150 582
- US-A1- 2006 118 221
- US-A1- 2007 095 447
- US-A1- 2007 272 337
- US-A1- 2007 295 435

## Description

### BACKGROUND OF THE INVENTION

### Field of the Invention

This invention relates generally to a tire that has one or more sipes having areas of reduced thickness and an apparatus for creating such a tire, and more specifically, to a tire that has a sipe with areas of reduced thickness that has undulations in a radial direction and in a transverse direction of a tire and to a sipe blade that is capable of forming such a sipe in a tire. In particular, the present invention relates to a sipe according to the preamble of claim 1, such as it is for example known from JP 2002 316517A and EP-A-1 533 141.

### Description of the Related Art

Sipes, which are thin slits found in the tread stock of a tire, are routinely used for enhancing performance characteristics of tires. They are frequently found within tread elements, such as blocks and/or ribs that are formed by the grooves found in the circumferential and/or transverse directions of the tires. Alternatively, other grooves found at other angles or directions on the tread stock can form these tread elements. It is known that the extra edges provided by sipes where they intersect the circumference of the tire increase the ability of the tire to adhere to a surface such as a road, which is good for handling and braking under wet conditions. These extra edges are particularly advantageous in reducing viscoplaning, improving wet traction. Also, siping provides surface edges and flexibility to a tread element, such as a tread block, that enhances snow traction. In addition, siping increases the flexibility of the tread element or block as it enters and exits the contact patch of the tire, which is where the tire contacts a road, reducing stress for improved wear performance, as well as reducing the generation of heat, thereby decreasing rolling resistance and increasing fuel efficiency. Hence, wet traction, snow traction, rolling resistance and wear performance of a tire can be improved by adding sipes to a certain extent. However, it is difficult to use siping in such a manner that all these performances are improved simultaneously.

In addition, it is also known that excessive siping or poor use of siping can increase hysteretic losses within a tread element or block and can increase rolling resistance, decreasing fuel efficiency. Siping decreases tread block rigidity which can degrade dry traction and wear life once the tread element is adherent in the contact patch. Accordingly,

it is desirable to a high number of sipes when the tread element or block is entering or exiting the contact patch to increase the flexibility of the tread, but to have as few sipes as possible when the tread element or block is in contact with the road so that the tread element is as stiff as possible.

Accordingly, there still exists a need for a configuration of a sipe that allows a tread element to be as flexible as possible when the tread element enters or exits a contact patch and that also allows the tread element to be as stiff as possible when the tread element is in the contact patch in order to improve the traction, handling characteristics, wear performance and rolling resistance of a tire simultaneously.

### SUMMARY OF THE INVENTION

The present invention provides a tire according to claim 1.

In certain embodiments, the half pitch of the undulations in the radial direction may range from approximately .7 millimeters to 1.25 mm and the amplitude may range from approximately .4 millimeters to .625 millimeters with twice the value of the amplitude always being greater than 95% of the value of the half pitch. In other embodiments, the tread element may have a top surface and the sipe may have a chamfer where the sipe meets the top surface of the tread element.

The sipe of the tire may have sidewalls that are complimentary shaped to each other and the region having reduced thickness can be formed by first and second protrusions found on a sidewall. In certain embodiments, the sipe further comprises a set of undulations in a direction that is substantially perpendicular to the radial direction of the tire. The half pitch and amplitude of either set of undulations may vary within the sipe.

In other embodiments, the undulations of the first sidewall in the radial direction of the tire has a midplane and the undulations of the first sidewall in a direction that is substantially perpendicular to the radial direction of the tire also has a midplane, and the midplanes of both sets of undulations are coplanar. Furthermore, the set of undulations of the first sidewall in the radial direction of the tire may vary in a manner that is similar to a periodic wave with a starting point of zero amplitude and the set of undulations of the first sidewall in a direction that is substantially perpendicular to the radial direction of the tire may also vary in a manner that is similar to a periodic wave with a half pitch and an amplitude and also has a starting point of zero amplitude. Both starting points may be aligned in the direction of the tire that is substantially perpendicular to the radial direction.

In certain applications, the undulations in both the radial direction of the tire and a direction that is substantially perpendicular to the radial direction of the tire may have peaks and valleys that periodically coincide with each other. The peaks of one set of undulations may periodically coincide with the peaks of the other set of undulations and the valleys of one set of undulations may periodically coincide with the valleys of the other set of undulations. In some situations, the region of the sipe having reduced thickness includes at least one peak or valley. In other situations, the region of the sipe having reduced thickness does not include a peak to peak or valley to valley coincidence.

A tire with a tread element according to an aspect of the present invention may have a sipe that has a half pitch and an amplitude of the undulations in the radial direction of the tire be different than the half pitch and amplitude of the undulations in the direction that is substantially perpendicular to the radial direction of the tire. In such a case, the half pitch can be approximately 3.7 millimeters and the amplitude can be approximately .75 millimeters for the undulations in the direction of the tire that is substantially perpendicular to the radial direction. Also, the half pitch and amplitude of the undulations in either the radial direction or the direction that is substantially perpendicular to the radial direction may vary within the sipe.

An apparatus for molding or retreading a tire having a tread and a radial direction according to an illustrative example not falling under the scope of the claims includes a curing member that has a curing surface that contacts the tread of the tire and a sipe blade that has a set of undulations in a radial direction with a half pitch and an amplitude wherein twice the value of the amplitude is greater than 95% of the value of the half pitch. The set of undulations is in a direction that is substantially perpendicular to the radial direction of a tire. The sets of undulations may form at least one peak or valley and at least one peak to peak or valley to valley coincidence. The sipe blade may have a thicker portion that extends from the curing member and a portion having a reduced thickness that includes at least one peak or valley.

Both sets of undulations of the sipe blade in the radial direction and in a direction that is substantially perpendicular to the radial direction may vary in a periodic manner and have peaks and valleys that periodically coincide with each other with at least one peak to peak or valley to valley coincidence. The portion of the sipe blade having a reduced thickness may not include any peak to peak or valley to valley coincidence. Furthermore, the sipe blade may comprise a series of portions having reduced thickness that are found between each of the peak to peak or valley to valley coincidences of the blade. One set of undulations may have a different half pitch and amplitude compared to the other set of undulations.

The sipe blade of the apparatus may have an amplitude for the undulations in the radial direction that is approximately .5 millimeters and a half pitch of .9 millimeters while the amplitude for the undulations in the direction of the tire that is substantially perpendicular to the radial direction may be approximately .75 millimeters and the half pitch may be approximately 3.7 millimeters.

The foregoing and other objects, features and advantages of the invention will be apparent from the following more detailed descriptions of particular embodiments of the invention, as illustrated in the accompanying drawings wherein like reference numbers represent like parts of the invention.

### BRIEF DESCRIPTION OF THE DRAWINGS

FIG. **1A** is a perspective view of a tire with sipes in its tread blocks according to a first embodiment of the present invention where the sipes have a zigzag configuration as the sipe exits a lateral surface of the tread block showing that radial undulations are present across the entire width of the sipe;
FIG. **1B** is a perspective view of a tire with sipes in its tread blocks according to a second embodiment of the present invention where the sipes have a straight configuration as the sipe exits a lateral surface of the tread block showing that radial undulations are hidden within the tread block;
FIG. **2** is a top view of the tire of FIG. **1B** having sipes oriented in a purely transverse direction for clarity;
FIG. **3** is cross-sectional view of the tire of FIG. **2** taken along line 3-3 thereof showing the cross-section of the thicker region of the sipe at a crest portion on the sipe that is found on the left side of the sipe;
FIG. **4** is a cross-sectional view of the tire of FIG. **2** taken along line 4-4 thereof showing the cross-section of the thicker region of the sipe at a crest portion on the sipe that is found on the right side of the sipe;
FIG. **5** is a cross-sectional view of the tire of FIG. **2** taken along line 5-5 thereof showing the cross-sectional view of the region of the sipe having reduced thickness;
FIG. **6** is cut away view of a tread block removed from the tire of FIG. **1B** showing a sidewall of the sipe and projections for forming areas of the sipe having reduced thickness more clearly;
FIG. **7** is a top view of the tire of FIG. **6** with the undulations in the radial direction, projections for forming the areas of the sipe having reduced thickness, and the bottom of the sipe removed so the undulations in the transverse direction of the tire can be more clearly seen;
FIG. **8** is a cross-sectional view of the tread block of FIG. **6** taken along along line 8-8 thereof with the transverse undulations hidden;
FIG. **9** is a perspective view of an apparatus that forms the sipe of the tire of FIG. **1B** with projections for forming the grooves that define the tread blocks of the tire removed for clarity; and
FIG. 10 is perspective view of the sipe blade of the apparatus of FIG. **9****.**

### DETAILED DESCRIPTION OF PARTICULAR EMBODIMENTS

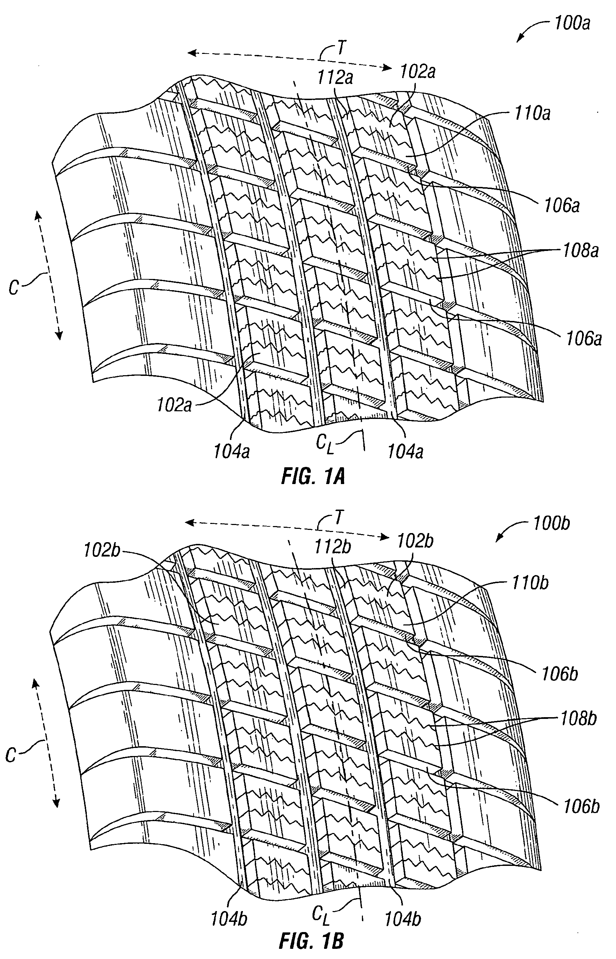

Looking at Figures **1A** and **1B****,** there is shown two embodiments of the present invention. They comprise, in part, a tire **100a, 100b** that has a series of tread elements in the form of tread blocks **102a, 102b** that are defined by circumferential and transverse grooves **104a, 104b, 106a, 106b** found along the tread stock of the tire in the circumferential and transverse directions of the tire. The term, "tread stock", may refer to the tread of a tire formed in a toroidal mold, or equally to a procured tread for use in retreading a tire. For reference, the circumferential direction **C** is the direction in which the tire rolls and is parallel with the centerline **C_{L}** of the tire. The transverse direction **T** is perpendicular to the circumferential direction and parallel with the axis of rotation (not shown) for the tire. Looking at the tread blocks **102a, 102b,** they have a series of sipes **108a, 108b** found within them that have a particular configuration according to an aspect of the current invention that increases the traction and flexibility of the tread block when it comes into contact with a surface such as a road but that allows the sipe to lock up when the tread block is in full contact with the road, enhancing the stiffness of the tread block and reducing the amount of rolling resistance of the tire. In the first embodiment as shown by FIG. **1A****,** the sipe **108a** forms a zigzag configuration with the top and lateral surfaces **110a, 112a** of the tread block **102a** while the in second embodiment as shown by FIG. **1B****,** the sipe forms a zigzag configuration with the top surface **110b** of the tread block and a straight configuration with the lateral surface **112b** of the tread block **102b** as it exits the tread block. Of course, it is contemplated that the reverse situation where the sipe forms a straight configuration with the top surface of the tread block and a zigzag configuration with the side surface could also be used. Accordingly, these figures are meant only to show that the way the sipes look externally is not essential to the present invention but it is the internal geometry that is important. Likewise, the shape of the tread elements can have any desired shape, such as ribs or blocks with any suitable perimeter formed by grooves oriented at any direction, including but not limited to the transverse and circumferential directions. It is also contemplated that the sipes could be found in the shoulders of the tire.

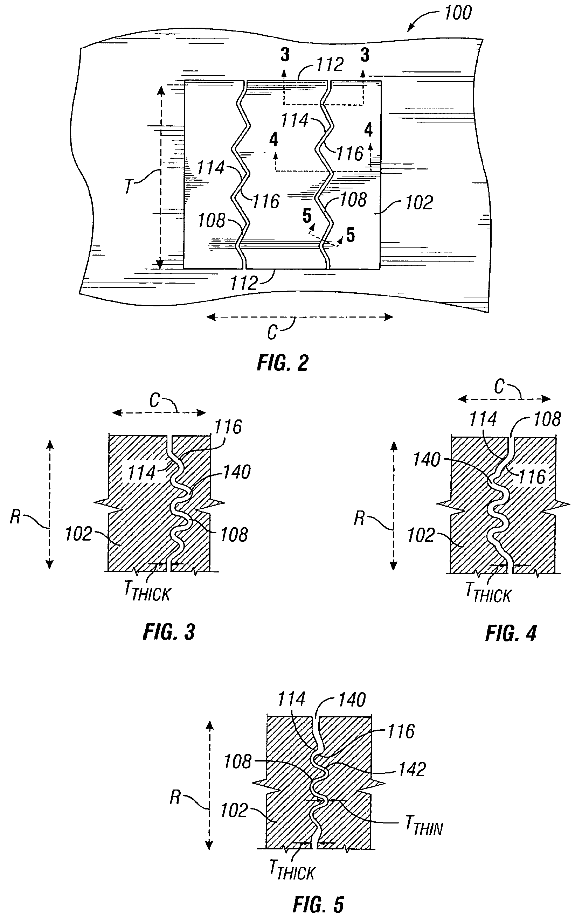

Focusing on FIGS. **2** - **8**, the features and construction of the sipe **108** shown in the tire of FIG. **1B** can be clearly seen (for brevity, the suffix b will be omitted from the reference numerals in these figures and any thereafter as it is to be understood that all these numerals pertain particularly to the features of the sipes of the tire shown in FIG. **1B**). It comprises, in part, opposing sidewalls **114, 116** that end in a bottom surface **118** found below the top surface **110** of the tread (see FIGS. **2** - **6**). Each sidewall **114, 116** has a first set of undulations that extend in the transverse direction of the tire and produce an undercut in that direction. While the undulations are shown in a purely transverse direction, it is to be understood that this a general representation of the direction in which these undulations extend and the "transverse" direction includes any slight deviation in angle that is common in tire design to minimize the problems such as noise associated with sipes that are oriented in a purely transverse direction. Also, these undulations may extend in any direction that is substantially perpendicular to the radial direction in addition to a purely transverse direction.

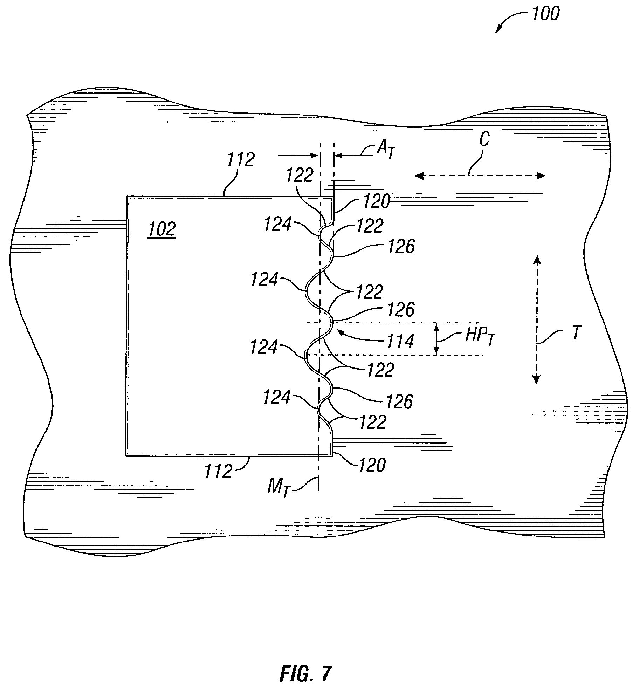

As can be clearly seen in FIG. **7** since the undulations in the radial direction **R** and the projections for forming the regions of the sipe having reduced thickness have been removed, these undulations begin with a straight section **120** that extends from a first lateral surface **112** of the tread block that transitions to a first angled section **122** that blends into a radius, forming a valley **124,** which in turn leads to another angled section **122** that then leads into another radius section that forms a peak **126.** Thus, the set of undulations has a repeating wavy pattern, similar to a sinusoidal wave but not necessarily having the exact same geometry (a saw tooth or similar profile could be used). This pattern terminates with another straight section **120** that leads to the second lateral surface **112** of the tread block **102**. The first valley **124** as measured from either lateral surface **112** of the tread block **102** does not have the full depth or protrusion as it is intended to allow the undulations to build up to a maximum amplitude gradually. Therefore, starting with the first peak **126** as measured from either lateral surface **112** of the tread block **102,** the amplitude **A_{T}** of these undulations is **.75** mm (approximately .030 of an inch) as measured from a peak or valley (surface of the sidewall **114, 116**) to the midplane **M_{T}** of these undulations in the circumferential direction **C.** Likewise, the half pitch **HP_{T}** is 3.7 mm (approximately **.147** of an inch) as measured from peak **126** to valley **124** in the transverse direction **T** of the tire. While it is shown that the transverse undulations stop short of either lateral surface of the tread block, it is possible that they could extend to either or both lateral surfaces. In addition, it is possible that the half pitch and amplitude of these undulations could be changed and still fall within the scope of the present invention. For example, the amplitude **A_{T}** could be 1.0 mm (approximately .04 of an inch) and the half pitch **HP_{T}** could be 5 mm (approximately .198 of an inch) or the values of **A_{T}** and **HP_{T}** could be varied within the sipe or there could be no undulations at all in this direction.

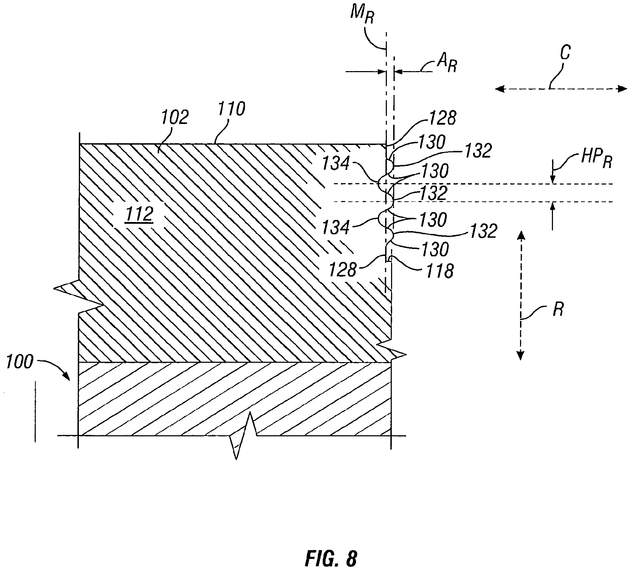

As best seen in FIG. **8****,** the sipe **108** also comprises a set of undulations that extends in the radial direction **R** of the tire, producing an undercut in that direction, and that has a similar configuration to the transverse set of undulations. While the undulations are shown in a purely radial direction, it is to be understood that this a general representation of the direction in which these undulations extend and the "radial" direction includes any slight deviation in angle that is common in tire design and that can be successfully molded and demolded. The transverse set of undulations starts a predetermined distance below the top surface **110** of the tread block **102** following a straight section **128** and comprises a series of angled sections **130** and radius sections that alternate about a midplane **M_{R}** to form peaks **132** and valleys **134.** The undulations terminate in a straight section **128** that is found at the bottom of the sipe. The half pitch **HP_{R}** of the radial set of undulations typically ranges from .7 to 1.25 mm (approximately .028 to .049 of an inch) as measured from a peak **132** to an adjacent valley **134** in the radial direction **R** of the tire. At the same time, the amplitude **A_{R}** typically ranges .4 to .625 mm (approximately .016 to .025 of an inch) as measured from a peak **132** or valley **134** (surface of the sidewall **114, 116**) to the midplane **M_{R}** of these undulations in a direction that is perpendicular to the midplane **M_{R}**. It should be noted that any range of values for the half pitch or amplitude could be used as long as twice the value of the amplitude is greater than 95% of the value of the half pitch which helps to increase the interlocking of the sipe and the rigidity of the block, which in conjunction with the thinned out regions of the sipe, provide a sipe with a significantly better performance than previous sipes as demonstrated by experimental results which are discussed later.

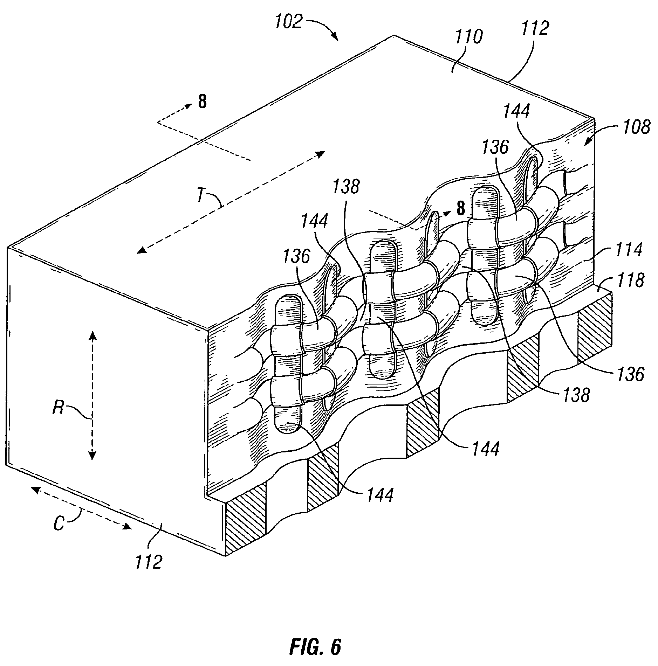

It is also contemplated that the half pitches and amplitudes of this set of radial undulations can be varied, and that the straight sections at the top and bottom of the sipe can be adjusted in length or eliminated altogether. Alternatively, an angled section near the top surface of the tread block could be provided to form a chamfer therewith. For this embodiment, the midplanes **M_{T}**, **M_{R}** of both set of undulations are coplanar, but it is contemplated that they do not necessarily need to be coplanar. Also, the starting points of each set of undulations are in alignment in the transverse direction **T** of the tire so that both sets of undulations are in phase with each other. Thus as shown in FIG. **6****,** the superposition of one set of undulations on the other set of undulations creates an egg crate looking pattern on the sipe with areas where peaks and valleys of each set of undulations periodically coincide with each other and where there is occasionally a peak to peak coincidence **136** or valley to valley coincidence **138.** This does not necessarily need to be the case for all embodiments of the present invention.

Turning to FIGS. **2 - 6**, another feature of the sipe that is shown is the existence of thicker and thinner regions, labeled as **140, 142** respectively, within the sipe **108** due to projections **144** found on one sidewall **114.** The thin regions **142** are formed by long vertically oriented projections **144** that cover the majority of the surface area of the sipe found between the peak to peak or valley to valley coincidences **136,138** of the undulations on the sidewall **114** and extend to within predetermined distances from the top surface **110** of the tread block and the bottom **118** of the sipe **108.** The thickness **T_{THICK}** of the thick region of the sipe, as defined by the distance between the opposing sidewalls in a direction normal to the surfaces thereof, is four tenths of a millimeter (approximately .157 of an inch) while the thickness **T_{THIN}** of the thin regions, as defined by the distance between the projections **144** of one sidewall **114** to the other sidewall **116** in a normal direction is two tenths of a millimeter (approximately .079 of an inch), but these values could be varied. It is preferable to have a ratio of the surface area of the projections **144** on the sidewall **114** to the surface area of the portion of the sidewall **114** forming the thicker region **140** of the sipe **108** to be at least 25% so that the sipe will effectively close as quickly as possible when the tread block **102** enters the contact patch with enough contact area between the opposing sidewalls **114, 116** so as to create as stiff a tread block **102** as possible. It is also preferable that the areas having reduced thickness extend to 70% of the height of the sipe **108** to help ensure that the tread block **102** is stiff when it is in the contact patch.

Consequently, the projections **144** include peaks **126, 132** and valleys **124, 134** of the undulations to maximize the surface area of the regions **142** of the sipe **108** having reduced thickness without including any peak to peak or valley to valley coincidences **136, 138,** which aids in the manufacture of a sipe blade as will be discussed later. As shown in this particular embodiment, the surface area of the projections **144** is at least 25% the surface area of the sidewall **114** that forms the thicker regions **140** of the sipe **108** but could be more. Also, the second sidewall **116** is complimentary shaped to the first sidewall **114** but does not have any projections **144** on it for forming the thinner regions **142** of the sipe **108.** It is contemplated that the entire second sidewall **116** does not need to be complimentary shaped to the first sidewall **114.**

Of course, the sipe **108** of the present invention could be altered. For example, the undulations are shown to alternate about a midplane but could have configurations that do not have this characteristic. So the undulations could include any geometry that varies causing an undercut in the radial or a non-radial direction of the tire. Also, the undulations do not need to have transitions with radii but could have abrupt changes in direction. Also, the thin regions shown by the figures is formed by projections found on only one sidewall but it could be formed by projections found on both sidewalls. Also, the sipe shown has undulations in both the radial and transverse **R, T** directions of the tire but it is possible that a sipe with undulations only extending in the radial direction (similar to what is shown in FIG. **7** except no projections are shown in that Figure for thinning out the sipe) with thinner and thicker regions having the desired surface area ratio of thin to thick areas of at least 25% could be used. Also, the sipe could extend in a direction that is not transverse but that is still substantially perpendicular to the radial direction of the tire. Also, the overall path of the sipes in both the radial and transverse **R, T** directions as shown is substantially linear along midplanes, **M_{R}** and **M_{T}**, but is contemplated that these paths could be something else such as curved. For example, see FIG. **5** of US Patent Application Publication No. 2008/0029193. In addition, the thickness of the thick and thin regions of the sipe could be altered in any suitable manner including a varying manner or in a manner where the thickness could smoothly transition from a thick region to a thin region.

Looking now at Table 1, there is shown a comparison between the handling characteristics of a tire with sipes with undulations in both the transverse and radial directions having areas of reduced thickness and of a tire with similarly configured sipes lacking areas of reduced thickness, both of which follow the design rule discussed earlier concerning the ratio of the values of the half pitch and amplitude. First, there is a significant 3% improvement in the rolling resistance when the areas of reduced thickness are added. This can be attributed to the added stiffness created by the sipes since they close and interlock more quickly, reducing compressive losses that occur during rolling. Second, there is a 7% increase in the wear life performance which is a direct result of increased tread block stiffness. Third, there is a 2% improvement in dry braking. All three of these improved ratings are statistically significant. Fourth, there is no observed degradation in wet braking performance. As can be seen, the proper ratio of the amplitude and half pitch of the radial undulations in conjunction with the areas of reduced thickness provide the necessary means to break the traditional compromises between rolling resistance, wear life, dry braking and wet braking which is a desirable and unexpected result.

**TABLE 1**

| PERFORMANCE CHARACTERISTIC | OLD SIPES | NEW SIPES |
|---|---|---|
| Rolling Resistance Index | 100 | 103 |
| Wear Life Index | 100 | 107 |
| Dry Braking Index | 100 | 102 |
| Wet Braking Index | 100 | 100 |

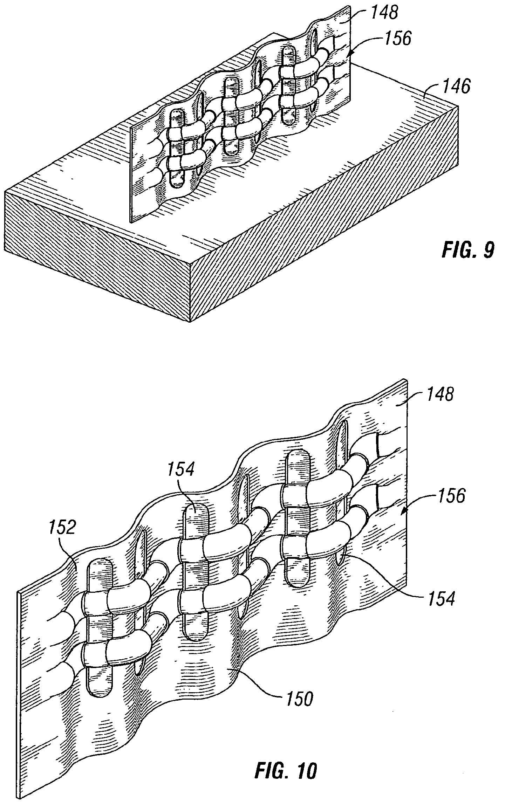

Turning to FIGS. 9 and 10, an apparatus that is capable of making a tire with such a sipe is shown. It comprises an apparatus for molding or retreading a tire that includes, in part, a curing member **146** from which a sipe blade **148** extends. While the curing member is shown to be flat, as would be the case in a retreading application, it could be a curved shaped mold sector that is used in a molding application. (Also, note that the projections of the curing member **146** for forming the grooves that define the tread block **102** into which the sipe blade **148** would normally extend have been omitted for clarity and that the apparatus would be inverted to form sipe **108**.)

The sipe blade **148** is attached to the curing member **146** by any means commonly known in the art such as using lock pins or by casting. The sipe blade **148** has a first portion **150,** with holes or undercuts (not shown) for retaining the blade **148** to the curing member **146** when it is attached thereto by casting and a second portion **152** that forms the sipe **108** of the tire. For this application, the first portion **150** of the sipe blade **148** extends 8 mm into the curing member **156** in order to provide sufficient holding strength when molding the sipe. The shape of the second portion **152** of the sipe blade **148** is the negative image of the sipe **108** with its sidewalls **156** forming the sidewalls **114, 116** of the sipe **108** with all of their undulations and projections. As a result, the blade **148** has a plurality of recesses **154** on one of its sidewalls that form the associated projections **144** found on one sidewall **114** of the sipe **108,** creating the thin regions **142** or areas of reduced thickness of the sipe **108.** The thickness of both the first portion **150** of the sipe blade **148** as well as the thick regions **140** of the second portion **152** of the sipe blade **148** are four tenths of a millimeter while the thickness of the recessed areas **154** of the blade are two tenths of a millimeter, but these thicknesses could be changed to create a sipe with any desired geometry. It is useful to have the first portion **150** of the blade **148** and the part of the second portion **152** of the blade **148** that is immediately next to the first portion **150** of the blade **148** be thicker as this provides the blade **148** with enough strength and durability where it extends from the curing member **146** so it can withstand stresses and cyclic fatigue as it makes sipes, allowing it to last longer.

Sipe blades are typically made from stainless steel but may be made from other materials having the desired properties. Furthermore, the shape and configuration of the sipe blade **148** may be altered and still fall within the scope of the present invention as long as it is the negative image of the sipes **108** discussed above. The sipe blade **148** may be made by any means known in the art such as the following. First, a plate of sheet stock having a thickness of four tenths of a millimeter is milled so that areas of reduced thickness are created in desired locations. Finally, a blank including the areas of reduced thickness is stamped out of the sheet stock and then folded into shape using a progressive die process. As can be seen, having a sipe **108** with projections **144** on only one sidewall is advantageous because it allows the recesses to be milled on only one side of sheet stock reducing the amount of time needed to manufacture the sipe blade **148.** Also, during forming the bending stresses and deformation are greatest where there is a peak to peak or valley to valley coincidence **136, 138** so the recesses of the sipe blade **148** are strategically located in places where there is no such coincidence so that any failure of the blade **148** in thinned out areas is avoided. Alternatively, the sipe blade **148** may be made using a laser sintering (selective laser melting process) or other rapid prototyping technology (such as micro-casting) that allows the recesses to be formed on both sides of the sipe blade **148** for forming the thin region **142** of the sipe **108** without increasing the time to manufacture such a blade **148.** When using such a technology, it is possible that the recesses of the blade and associated thinned out areas of the sipe could be found on a peak to peak or valley to valley coincidence since failure due to bending in these areas is not an issue since there is no bending. In particular, the technology disclosed in US Pat. No. 5,252,264 can be used to make this blade.

While the embodiments of the sipe **108** and sipe blade **148** discussed herein have only undulations, other features could be added and still fall within the scope of the present invention. For example, the sipe **108** or sipe blade **148** could have a Y branch or tear drop feature found at its bottom portion. Similarly, other features could be found on the side or top portions of the sipe **108** or sipe blade **148** including chamfers. In similar fashion, the embodiments described above are specifically used in conjunction with a tread block **102,** but it is possible that they could be used in conjunction with other tread elements such as a rib. Likewise, the present invention can be used on both pneumatic and non-pneumatic tires alike. Accordingly, these variations are also within the scope of the present invention.

As can be seen, the sipe and the apparatus for forming the sipe including a sipe blade and curing member, provide a way to make a tread block with sipes that is as flexible as possible when the tread block first enters or exits contact with the road, but that is as stiff as possible when the tread block is in contact with the road. This is accomplished primarily by providing the sipe with tight pitched undulations in the radial direction that have areas of reduced thickness, allowing the sipe to close up as quickly as possible when the tread block is in the contact patch. Hence, this sipe and sipe blade satisfy the aforementioned needs of providing a tread block that is flexible as possible when entering or exiting the contact patch and is as stiff as possible when in the contact patch. Also, this sipe configuration breaks the compromise that is typically found between different tire performances, providing a beneficial and unexpected result.

The terms "comprising," "including," and "having," as used in the claims and specification herein, shall be considered as indicating an open group that may include other elements not specified. The term "consisting essentially of," as used in the claims and specification herein, shall be considered as indicating a partially open group that may include other elements not specified, so long as those other elements do not materially alter the basic and novel characteristics of the claimed invention. The terms "a," "an," and the singular forms of words shall be taken to include the plural form of the same words, such that the terms mean that one or more of something is provided. The terms "at least one" and "one or more" are used interchangeably. The terms "preferably," "preferred," "prefer," "optionally," "may," and similar terms are used to indicate that an item, condition or step being referred to is an optional (not required) feature of the invention. Ranges that are described as being "between a and b" are inclusive of the values for "a" and "b."

It should be understood from the foregoing description that various modifications and changes may be made to the embodiments of the present invention. The foregoing description is provided for the purpose of illustration only and should not be construed in a limiting sense. Only the language of the following claims should limit the scope of this invention.

## Claims

1. A tire (100, 100a, 100b) with a tread stock and a radial direction (R) comprising:
a tread element (102, 102a, 102b); and
a sipe (108, 108a, 108b) located within the tread element (102, 102a, 102b) having first (114) and second (116) opposing sidewalls, said first sidewall (114) having a first set of undulations in a radial direction (R) of the tire (100, 100a, 100b) with a half pitch (HP_{R}), and an amplitude (AR) measured from a peak (132) or valley (134) to a midplane M_{R} in the radial direction (R) of the tire, said sipe (108, 108a, 108b) having a thicker region (140) with said opposing sidewalls (114, 116) being spaced apart a first predetermined distance (T_{THICK}), said sipe (108, 108a, 108b) further comprising a region (142) having a reduced thickness with the opposing sidewalls (114, 116) being spaced apart a second predetermined distance (T_{THIN}), said second predetermined distance (T_{THIN}) being less than the first predetermined distance (T_{THICK})
**characterized in that** the region (142) having a reduced thickness is formed by vertically oriented projections (144) formed on the first opposing sidewall (114) that include peaks (132) and valleys (134) of the first set of undulations and twice the value of the amplitude (AR) is greater than 95% of the value of the half pitch (HP_{R}), and the first sidewall (114) of the region (142) with a reduced thickness has a surface area that is at least 25% and less than 85% of the surface area of the sidewall of the thicker region (140) of the sipe (108, 108a, 108b).

2. The tire (100, 100a, 100b) of claim 1 wherein said sidewalls have complementary shapes to each other.

3. The tire (100, 100a, 100b) of claim 1 wherein the sipe (108, 108a, 108b) further comprises a second set of undulations in a direction that is substantially perpendicular to the radial direction (R) of the tire (100, 100a, 100b) and the half pitch (HPR) of the first set of undulations ranges from approximately .7 millimeters to 1.25 millimeters and the amplitude (AR) ranges from .4 millimeters to .625 millimeters with twice the value of the amplitude (AR) always being greater than 95% of the value of the half pitch (HPR).

4. The tire (100, 100a, 100b) of claim 3 wherein the undulations of the first sidewall (114) in the radial direction (R) of the tire (100, 100a, 100b) has a midplane and the undulations of the first sidewall (114) in a direction that is substantially perpendicular to the radial direction (R) of the tire (100, 100a, 100b) also has a midplane and wherein said midplanes are coplanar.

5. The tire (100, 100a, 100b) of claim 4 wherein the first set of undulations of the first sidewall (114) in the radial direction (R) of the tire (100, 100a, 100b) varies in a manner that is similar to a periodic wave with a starting point of zero amplitude (AR) and the second set of undulations of the first sidewall (114) in a direction that is substantially perpendicular to the radial direction (R) of the tire (100, 100a, 100b) also varies in a manner that is similar to a periodic wave with a half pitch (HPR) and an amplitude (AR) and also has a starting point of zero amplitude (AR), wherein both starting points are aligned in the direction of the tire (100, 100a, 100b) that is substantially perpendicular to the radial direction (R).

6. The tire (100, 100a, 100b) of claim 5 wherein said undulations in both the radial direction (R) of the tire (100, 100a, 100b) and a direction that is substantially perpendicular to the radial direction (R) of the tire (100, 100a, 100b) have peaks and valleys that periodically coincide with each other and wherein peaks of one set of undulations periodically coincides with the peaks of the other set of undulations and wherein the valleys of one set of undulations periodically coincides with the valleys of the other set of undulations.

7. The tire (100, 100a, 100b) of claim 6 wherein the region (142) having reduced thickness of the sipe (108, 108a, 108b) includes at least one peak or valley.

8. The tire (100, 100a, 100b) of claim 6 wherein the region (142) having reduced thickness of the sipe (108, 108a, 108b) does not include a peak to peak or valley to valley coincidence.

9. The tire (100, 100a, 100b) of claim 8 wherein the half pitch (HPR) and amplitude (AR) of the undulations in the radial direction (R) of the tire (100, 100a, 100b) are not the same as the half pitch (HPR) and amplitude (AR) of the undulations in the direction that is substantially perpendicular to the radial direction (R) of the tire (100, 100a, 100b).

10. The tire (100, 100a, 100b) of claim 9 wherein the half pitch (HPR) is approximately 3.7 millimeters and the amplitude is approximately .75 millimeters for the undulations in the direction of the tire (100, 100a, 100b) that is substantially perpendicular to the radial direction (R).

11. The tire (100, 100a, 100b) of claim 1 or claim 3 wherein the amplitude (AR) or half pitch (HPR) of the undulations varies.

12. The tire (100, 100a, 100b) of claim 1 wherein the tread element (102, 102a, 102b) has a top surface and the sipe (108, 108a, 108b) has a chamfer where the sipe (108, 108a, 108b) meets the top surface of the tread element (102, 102a, 102b).

## Patentansprüche

1. Reifen (100, 100a, 100b) mit einem Laufflächenmaterial und einer Radialrichtung (R), der Folgendes umfasst:
ein Laufflächenelement (102, 102a, 102b); und
eine Lamelle (108, 108a, 108b), die innerhalb des Laufflächenelements (102, 102a, 102b) angeordnet ist, wobei sie eine erste (114) und eine zweite (116) gegenüberliegende Seitenwand hat, wobei die erste Seitenwand (114) einen ersten Satz von Wellungen in einer Radialrichtung (R) des Reifens (100, 100a, 100b) mit einer halben Teilung (HP_{R}) und einer Amplitude (AR), gemessen von einem Scheitel (132) oder einem Tal (134) zu einer Mittelebene M_{R} in der Radialrichtung (R) des Reifens, hat, wobei die Lamelle (108, 108a, 108b) einen dickeren Bereich (140) hat, wobei die gegenüberliegenden Seitenwände (114, 116) um eine erste vorbestimmte Entfernung (T_{THICK}) beabstandet sind, wobei die Lamelle (108, 108a, 108b) ferner einen Bereich (142) umfasst, der eine verringerte Dicke hat, wobei die gegenüberliegenden Seitenwände (114, 116) um eine zweite vorbestimmte Entfernung (T_{THIN}) beabstandet sind, wobei die zweite vorbestimmte Entfernung (T_{THIN}) geringer ist als die erste vorbestimmte Entfernung (T_{THICK}),
**dadurch gekennzeichnet, dass** der Bereich (142), der eine verringerte Dicke hat, durch vertikal ausgerichtete, auf der ersten gegenüberliegenden Seitenwand (114) geformte, Vorsprünge (144) gebildet wird, die Scheitel (132) und Täler (134) des ersten Satzes von Wellungen einschließen, und der zweifache Wert der Amplitude (AR) größer ist als 95 % des Wertes der halben Teilung (HP_{R}) und die erste Seitenwand (114) des Bereichs (142), der eine verringerte Dicke hat, eine Oberfläche hat, die wenigstens 25 % und weniger als 85 % der Oberfläche des dickeren Bereichs (140) der Lamelle (108, 108a, 108b) beträgt.

2. Reifen (100, 100a, 100b) nach Anspruch 1, wobei die Seitenwände zueinander komplementäre Formen haben.

3. Reifen (100, 100a, 100b) nach Anspruch 1, wobei die Lamelle (108, 108a, 108b) ferner einen zweiten Satz von Wellungen in einer Richtung, die im Wesentlichen senkrecht zu der Radialrichtung (R) des Reifens (100, 100a, 100b) ist, umfasst und die halbe Teilung (HP_{R}) des ersten Satzes von Wellungen von ungefähr 0,7 Millimeter bis 1,25 Millimeter reicht und die Amplitude (AR) von 0,4 Millimeter bis 0,625 Millimeter reicht, wobei der zweifache Wert der Amplitude (AR) immer größer ist als 95 % des Wertes der halben Teilung (HP_{R}).

4. Reifen (100, 100a, 100b) nach Anspruch 3, wobei die Wellungen der ersten Seitenwand (114) in der Radialrichtung (R) des Reifens (100, 100a, 100b) eine Mittelebene haben und die Wellungen der ersten Seitenwand (114) in einer Richtung, die im Wesentlichen senkrecht zu der Radialrichtung (R) des Reifens (100, 100a, 100b) ist, ebenfalls eine Mittelebene haben und wobei die Mittelebenen komplanar sind.

5. Reifen (100, 100a, 100b) nach Anspruch 4, wobei der erste Satz von Wellungen der ersten Seitenwand (114) in der Radialrichtung (R) des Reifens (100, 100a, 100b) auf eine Weise variiert, die ähnlich einer periodischen Welle mit einem Startpunkt der Amplitude (AR) null ist, und der zweite Satz von Wellungen der ersten Seitenwand (114) in einer Richtung, die im Wesentlichen senkrecht zu der Radialrichtung (R) des Reifens (100, 100a, 100b) ist, ebenfalls auf eine Weise variiert, die ähnlich einer periodischen Welle mit einer halben Teilung (HP_{R}) und einer Amplitude (AR) ist und ebenfalls einen Startpunkt der Amplitude (AR) null hat, wobei beide Startpunkte in der Richtung des Reifens (100, 100a, 100b), die im Wesentlichen senkrecht zu der Radialrichtung (R) ist, ausgerichtet sind.

6. Reifen (100, 100a, 100b) nach Anspruch 5, wobei die Wellungen sowohl in der Radialrichtung (R) des Reifens (100, 100a, 100b) als auch in einer Richtung, die im Wesentlichen senkrecht zu der Radialrichtung (R) des Reifens (100, 100a, 100b) ist, Scheitel und Täler haben, die periodisch miteinander übereinstimmen, und wobei Scheitel des einen Satzes von Wellungen periodisch mit den Scheiteln des anderen Satzes von Wellungen übereinstimmen und wobei die Täler des einen Satzes von Wellungen periodisch mit den Tälern des anderen Satzes von Wellungen übereinstimmen.

7. Reifen (100, 100a, 100b) nach Anspruch 6, wobei der Bereich (142) der Lamelle (108, 108a, 108b), der eine verringerte Dicke hat, wenigstens einen Scheitel oder ein Tal einschließt.

8. Reifen (100, 100a, 100b) nach Anspruch 6, wobei der Bereich (142) der Lamelle (108, 108a, 108b), der eine verringerte Dicke hat, keine Übereinstimmung von Scheitel zu Scheitel oder von Tal zu Tal einschließt.

9. Reifen (100, 100a, 100b) nach Anspruch 8, wobei die halbe Teilung (HP_{R}) und die Amplitude (AR) der Wellungen in der Radialrichtung (R) des Reifens (100, 100a, 100b) nicht die gleichen sind wie die halbe Teilung (HP_{R}) und die Amplitude (AR) der Wellungen in der Richtung, die im Wesentlichen senkrecht zu der Radialrichtung (R) des Reifens (100, 100a, 100b) ist.

10. Reifen (100, 100a, 100b) nach Anspruch 9, wobei für die Wellungen in der Richtung des Reifens (100, 100a, 100b), die im Wesentlichen senkrecht zu der Radialrichtung (R) ist, die halbe Teilung (HP_{R}) ungefähr 3,7 Millimeter beträgt und die Amplitude ungefähr 0,75 Millimeter beträgt.

11. Reifen (100, 100a, 100b) nach Anspruch 1 oder Anspruch 3, wobei die Amplitude (AR) oder die halbe Teilung (HP_{R}) der Wellungen variiert.

12. Reifen (100, 100a, 100b) nach Anspruch 1, wobei das Laufflächenelement (102, 102a, 102b) eine obere Fläche hat und die Lamelle (108, 108a, 108b) eine Abschrägung hat, wo die Lamelle (108, 108a, 108b) auf die obere Fläche des Laufflächenelements (102, 102a, 102b) trifft.

## Revendications

1. Pneumatique (100, 100a, 100b) avec une bande roulement et une direction radiale (R), comportant :
un élément (102, 102a, 102b) de bande de roulement ; et
une lamelle (108, 108a, 108b) située dans l'élément (102, 102a, 102b) de bande de roulement ayant une première (114) et une seconde (116) parois latérales opposées, ladite première paroi latérale (114) ayant une première série d'ondulations dans une direction radiale (R) du pneumatique (100, 100a, 100b) avec un demi-pas (HP_{R}), et une amplitude (AR) mesurée depuis un sommet (132) ou un creux (134) par rapport à un plan médian M_{R} dans la direction radiale (R) du pneumatique, ladite lamelle (108, 108a, 108b) ayant une région la plus épaisse (140) avec lesdites parois latérales opposées (114, 116) espacées l'une de l'autre d'une première distance prédéterminée (T_{THICK)}, ladite lamelle (108, 108a, 108b) comprenant en outre une région (142) ayant une épaisseur réduite avec les parois latérales opposées (114, 116) espacées l'une de l'autre d'une seconde distance prédéterminée (T_{THIN}), ladite seconde distance prédéterminée (T_{THIN)} étant inférieure à la première distance prédéterminée (T_{THICK})
**caractérisée en ce que** la région (142) à épaisseur réduite est formée par des saillies à orientation verticale (144) formées sur la première paroi latérale opposée (114), qui comprennent des sommets (132) et des creux (134) de la première série d'ondulations, et le double de la valeur de l'amplitude (AR) est supérieur à 95 % de la valeur du demi-pas (HP_{R}), et la première paroi latérale (114) de la région (142) à épaisseur réduite a une superficie d'au moins 25 % et inférieure à 85 % de la superficie de la paroi latérale de la région la plus épaisse (140) de la lamelle (108, 108a, 108b).

2. Pneumatique (100, 100a, 100b) selon la revendication 1, dans lequel lesdites parois latérales ont des formes complémentaires l'une de l'autre.

3. Pneumatique (100, 100a, 100b) selon la revendication 1, dans lequel la lamelle (108, 108a, 108b) comprend en outre une deuxième série d'ondulations dans une direction sensiblement perpendiculaire à la direction radiale (R) du pneumatique (100, 100a, 100b) et le demi-pas (HP_{R}) de la première série d'ondulations est d'environ 0,7 millimètre à 1,25 millimètres et l'amplitude (AR) est de 0,4 millimètre à 0,625 millimètre, le double de la valeur de l'amplitude (AR) étant toujours supérieur à 95 % de la valeur du demi-pas (HP_{R}).

4. Pneumatique (100, 100a, 100b) selon la revendication 3, dans lequel les ondulations de la première paroi latérale (114) dans la direction radiale (R) du pneumatique (100, 100a, 100b) ont un plan médian et les ondulations de la première paroi latérale (114) dans une direction sensiblement perpendiculaire à la direction radiale (R) du pneumatique (100, 100a, 100b) ont elles aussi un plan médian, lesdits plans médians étant dans le même plan.

5. Pneumatique (100, 100a, 100b) selon la revendication 4, dans lequel la première série d'ondulations de la première paroi latérale (114) dans la direction radiale (R) du pneumatique (100, 100a, 100b) varie d'une manière similaire à une onde périodique avec un point de départ d'amplitude zéro (AR) et la seconde série d'ondulations de la première paroi latérale (114) dans une direction sensiblement perpendiculaire à la direction radiale (R) du pneumatique (100, 100a, 100b) varie elle aussi d'une manière similaire à une onde périodique avec un demi-pas (HP_{R}) et une amplitude (AR) et a elle aussi un point de départ d'amplitude zéro (AR), les deux points de départ étant alignés dans la direction du pneumatique (100, 100a, 100b) sensiblement perpendiculaire à la direction radiale (R).

6. Pneumatique (100, 100a, 100b) selon la revendication 5, dans lequel lesdites ondulations dans la direction radiale (R) du pneumatique (100, 100a, 100b) ainsi que dans une direction sensiblement perpendiculaire à la direction radiale (R) du pneumatique (100, 100a, 100b) ont des sommets et des creux qui coïncident périodiquement les uns avec les autres et dans lequel les sommets d'une première série d'ondulations coïncident périodiquement avec les sommets de l'autre série d'ondulations et dans lequel les creux d'une première série d'ondulations coïncident périodiquement avec les creux de l'autre série d'ondulations.

7. Pneumatique (100, 100a, 100b) selon la revendication 6, dans lequel la région (142) d'épaisseur réduite de la lamelle (108, 108a, 108c) comprend au moins un sommet ou un creux.

8. Pneumatique (100, 100a, 100b) selon la revendication 6, dans lequel la région (142) d'épaisseur réduite de la lamelle (108, 108a, 108c) ne comprend pas de coïncidence de sommet à sommet ni de coïncidence de creux à creux.

9. Pneumatique (100, 100a, 100b) selon la revendication 8, dans lequel le demi-pas (HP_{R}) et l'amplitude (AR) des ondulations dans la direction radiale (R) du pneumatique (100, 100a, 100b) ne sont pas identiques au demi-pas (HP_{R}) et à l'amplitude (AR) des ondulations dans la direction sensiblement perpendiculaire à la direction radiale (R) du pneumatique (100, 100a, 100b).

10. Pneumatique (100, 100a, 100b) selon la revendication 9, dans lequel le demi-pas (HP_{R}) est d'environ 3,7 millimètres et l'amplitude est d'environ 0,75 millimètre pour les ondulations dans la direction du pneumatique (100, 100a, 100b) sensiblement perpendiculaire à la direction radiale (R).

11. Pneumatique (100, 100a, 100b) selon la revendication 1 ou la revendication 3, dans lequel, l'amplitude (AR) ou le demi-pas (HP_{R}) des ondulations varie.

12. Pneumatique (100, 100a, 100b) selon la revendication 1, dans lequel l'élément (102, 102a, 102b) de bande de roulement a une surface supérieure et la lamelle (108, 108a, 108b) a un chanfrein où la lamelle (108, 108a, 108b) rencontre la surface supérieure de l'élément (102, 102a, 102b) de bande de roulement.
